# EUROPEAN PATENT APPLICATION

(11) **EP 2 675 229 A1**
(43) Date of publication of application: **18.12.2013**
(21) Application number: 12754858.4
(22) Date of filing: 15.02.2012
(51) Int. Cl.: H04W 72/04

(54) **METHOD AND DEVICE FOR RESOLVING COLLISION BETWEEN APERIODIC SRS AND UPLINK CONTROL SIGNALING**

(30) Priority: 09.03.2011 CN 201110056601
(71) Applicant: Huawei Technologies Co., Ltd., Shenzhen, Guangdong 518129 (CN)
(72) Inventor: ZHOU, Mingyu, Shenzhen Guangdong 518129 (CN); REN, Xiaotao, Shenzhen Guangdong 518129 (CN)
(74) Representative: Körber, Martin Hans
(86) International application number: PCT/CN2012/071154
(87) International publication number: WO 2012/119505

(57) **Abstract**

The present invention provides a method for resolving a collision between an aperiodic sounding reference signal (SRS) and an uplink control signaling, including: acquiring priority criteria of the aperiodic SRS and the uplink control signaling of a user equipment (UE); receiving, by the UE, a downlink control signaling transmitted by a base station, and acquiring a time when a transmission of the aperiodic SRS is needed; if a transmission of the uplink control signaling through a physical uplink control channel (PUCCH) is needed at the time when the transmission of the aperiodic SRS is needed, transmitting, by the UE, the aperiodic SRS or the uplink control signaling with a higher priority at the time according to the acquired priority criteria; if the transmission of the uplink control signaling through the PUCCH is not needed at the time when the transmission of the aperiodic SRS is needed, transmitting the aperiodic SRS at the time. Embodiments of the present invention also provide a device for resolving the collision between the aperiodic SRS and the uplink control signaling.

## Description

This application claims priority to Chinese Patent Application No. 201110056601.0, filed on March 9, 2011, entitled "METHOD AND DEVICE FOR RESOLVING COLLISION BETWEEN APERIODIC SRS AND UPLINK CONTROL SIGNALING", which is hereby incorporated herein by reference in its entirety.

### TECHNICAL FIELD

The present invention relates to the field of mobile communication technology and, in particular, to a method and a device for resolving a collision between an aperiodic sounding reference signal (SRS) and an uplink control signaling.

### BACKGROUND

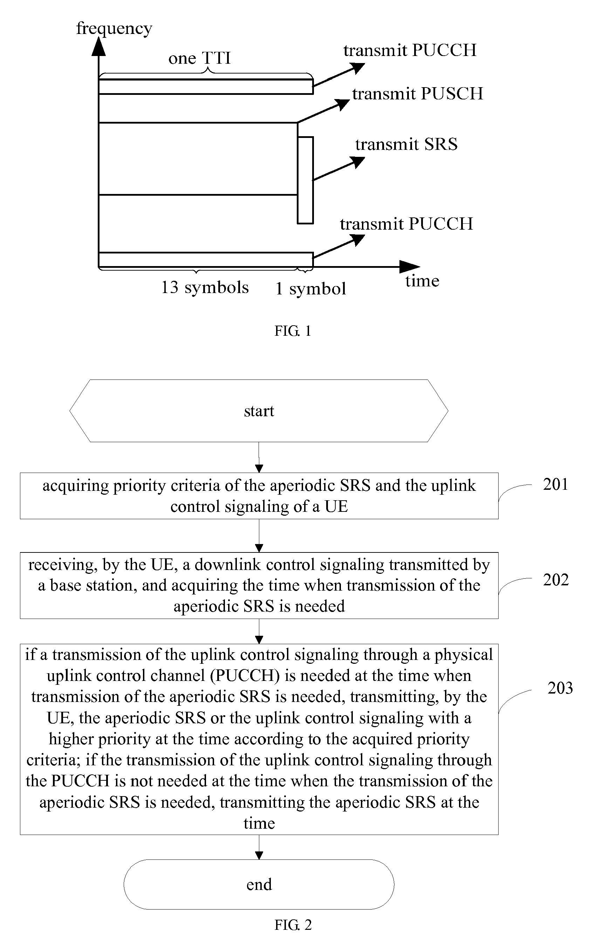

In a conventional communication system, such as a long term evolution (Long Term Evolution, LTE) system, the uplink transmission frame structure is as shown in FIG. 1, where the abscissa indicates time and the ordinate indicates frequency. One transmission time interval (Transmission Time Interval, TTI) is 1 millisecond (ms) in length, and includes 14 symbols in the time domain. The uplink transmission channel includes a physical uplink shared channel (Physical Uplink Shared Channel, PUSCH), a physical uplink control channel (Physical Uplink Control Channel, PUCCH), and a sounding reference signal (Sounding Reference Signal, SRS).

Where, the PUCCH is configured to transmit an uplink control signaling and may occupy all the 14 symbols within a TTI. The SRS is configured to detect uplink channel state information (Channel State Information, CSI), and fixed on the last symbol within a TTI for transmission. The PUSCH is configured to transmit an uplink data. A user equipment (User Equipment, UE) transmits the uplink control signaling through a PUCCH (transmitting PUCCH for short, the same below); in terms of the SRS, the UE transmits the SRSs periodically. The transmitting PUCCH includes, but not limited to, transmitting the uplink control signaling through the PUCCH periodically or transmitting the uplink control signaling through the PUCCH as triggered by a certain event, for example, in a system adopting an automatic repeat request (Automatic Repeat request, ARQ) technique, if a base station transmits a downlink data to a UE within the k-th TTI, then the UE needs to feed back an acknowledgement or a non-acknowledgement (Acknowledgement/Non-Acknowledgement, ACK/NAK) through the PUCCH within the (k+4)-th TTI, and notifies the base station of a result that whether the UE has decoded the downlink data successfully, so that the base station decides to retransmit the transmitted downlink data or transmits new data to the UE, that is, the UE transmits the PUCCH as triggered by the downlink data transmitted by the base station.

It can be seen from FIG. 1, since the PUCCH may also be transmitted on the last symbol within a TTI, a signaling collision may occur, that is, both the PUCCH and the SRS occur in the same TTI.

Since transmitting two types of signals at the same time will causes increasing of a peak-to-average signal ratio, therefore, when a signaling collision occurs, it is often resolved in manner of avoiding or discarding in the prior art since the PUCCH often has a higher priority. For example, in an LTE system, the PUCCH has two formats, format 1 and format 2. The base station configures a value of a 1-bit Boolean-type indicator field (ackNackSRS-SimultaneousTransmission) and notifies the UE of the value through the signaling, and the UE performs the following processing:
if the indicator field is configured to be FALSE, discarding the SRS and only transmitting the PUCCH format 1 when both the PUCCH format 1 and the SRS occur in the same TTI;
if the indicator field is configured to be TRUE, transmitting the PUCCH in a shortened format, namely, transmitting the PUCCH format 1 on the first 13 symbols within the TTI and transmitting the SRS on the last symbol within the TTI, when both the PUCCH format 1 and the SRS occur in the same TTI;
discarding the SRS and only transmitting the PUCCH format 2 when both the PUCCH format 2 and the SRS occur in the same TTI, regardless of the value of the indicator field.

Such solution can solve the problem of the signaling collision in the LTE system. However, in a further evolved system of the LTE (LTE-Advanced), an aperiodic SRS is introduced, the base station may carry a triggering instruction of the aperiodic SRS in a downlink control signaling transmitted to the UE through a downlink control channel (Physical Downlink Control Channel, PDCCH), so as to trigger the UE to transmit the aperiodic SRS, so that the base station can detect the uplink CSI dynamically. The downlink control signaling includes an aperiodic SRS transmission field, which may be 1 bit, and when the field is 1, it is represented that the base station triggers the UE to transmit the aperiodic SRS; and when the filed is 0, it is represented that the base station doesn't trigger the UE to transmit the aperiodic SRS.

If continuing to use the solution in the prior art, when the PUCCH format 2 and the aperiodic SRS are both to be transmitted within the same TTI, the aperiodic SRS will be discarded. However, since the aperiodic SRS is transmitted as triggered by the downlink control signaling and the downlink control signaling resources are valuable, the prior art will cause the function of the downlink control signaling for triggering the aperiodic SRS to be invalid.

### SUMMARY

The present invention provides a technical solution for resolving a collision between an aperiodic SRS and an uplink control signaling, so that probability that the aperiodic SRS is discarded can be reduced when both a PUCCH and an aperiodic SRS occur in the same TTI, and the base station can detect an uplink CSI dynamically without being damaged by the collision issue between PUCCH and the aperiodic SRS.

Embodiments of the present invention provide a method for resolving the collision between the aperiodic SRS and the uplink control signaling, including the following steps of:
acquiring priority criteria of the aperiodic SRS and the uplink control signaling of a user equipment (UE);
receiving, by the UE, a downlink control signaling transmitted by a base station, and acquiring a time when a transmission of the aperiodic SRS is needed;
if a transmission of the uplink control signaling through a physical uplink control channel (PUCCH) is needed at the time when the transmission of the aperiodic SRS is needed, transmitting, by the UE, the aperiodic SRS or the uplink control signaling with a higher priority at the time according to the acquired priority criteria; if the transmission of the uplink control signaling through the PUCCH is not needed at the time when the transmission of the aperiodic SRS is needed, transmitting the aperiodic SRS at the time.

Embodiments of the present invention also provide a device for resolving the collision between the aperiodic SRS and the uplink control signaling, where the device is located in a UE, and includes:
a priority criterion module, configured to acquire and save priority criteria of the aperiodic SRS and the uplink control signaling of the UE;
a receiving module, configured to receive a downlink control signaling transmitted by a base station, and acquire the time when a transmission of the aperiodic SRS is needed; and
an executing module, configured to: if a transmission of the uplink control signaling through a physical uplink control channel (PUCCH) is needed at the time when the transmission of the aperiodic SRS is needed, transmit, by the UE, the aperiodic SRS or the uplink control signaling with a higher priority at the time according to the set priority criteria; if the transmission of the uplink control signaling through the PUCCH is not needed at the time when the transmission of the aperiodic SRS is needed, transmit the aperiodic SRS at the time.

Embodiments of the present invention still provide another method for resolving a collision between the aperiodic SRS and the uplink control signaling, including the following steps of:
configuring, by the base station, priority criteria of the aperiodic SRS and the uplink control signaling;
transmitting, by the base station, a downlink control signaling to the UE, wherein the downlink control signaling is used to notify the UE of a time when a transmission of the aperiodic SRS is needed;
if a reception of the uplink control signaling through a physical uplink control channel (PUCCH) is needed at a receiving time corresponding to the time when the transmission of the aperiodic SRS is needed, receiving, by the base station, the aperiodic SRS or the uplink control signaling with a higher priority at the receiving time according to the acquired priority criteria; if the reception of the uplink control signaling through the PUCCH is not needed at the receiving time when the transmission of the aperiodic SRS is needed, receiving the aperiodic SRS at the receiving time.

Embodiments of the present invention also provide another device for resolving the collision between the aperiodic SRS and the uplink control signaling, where the device is located in a base station side, and includes:
a priority criterion module, configured to configure priority criteria of the aperiodic SRS and the uplink control signaling;
a signaling transmitting module, configured to transmit a signaling carrying the priority criteria of the aperiodic SRS and the uplink control signaling set by the priority criterion module to a user equipment (UE); and configured to transmit a downlink control signaling to the UE, wherein the downlink control signaling is used to notify the UE of a time when a transmission of the aperiodic SRS is needed;
an receiving module, configured to receive the uplink control signaling or the aperiodic SRS at a receiving time corresponding to the time when the transmission of the aperiodic SRS is needed, particularly comprising: if a reception of the uplink control signaling through a physical uplink control channel (PUCCH) is needed at the time when the transmission of the aperiodic SRS is needed, receiving, by the base station, the aperiodic SRS or the uplink control signaling with a higher priority at the receiving time according to the acquired priority criteria; if the reception of the uplink control signaling through the PUCCH is not needed at the time when the transmission of the aperiodic SRS is needed, receiving the aperiodic SRS at the receiving time.

It can be seen from the above technical solutions, after knowing that the uplink control signaling is needed to be transmitted at the time when the transmission of the aperiodic SRS is needed, the UE selects a signaling with a higher priority for transmission according to the preset priority criteria, so that the collision between the aperiodic SRS and the uplink control signaling can be avoided. Embodiments of the present invention also provide examples of various priority criteria, which can achieve different control effects.

### BRIEF DESCRIPTION OF DRAWINGS

FIG. 1 is a schematic diagram of an uplink transmission frame structure in an LTE system;
FIG. 2 is a flow chart of a method for resolving a collision between an aperiodic SRS and an uplink control signaling according to an embodiment of the present invention;
FIG. 3a is a schematic diagram of a TTI available for an aperiodic SRS of a UE in an LTE-A system;
FIG. 3b is a schematic diagram of a collision between an aperiodic SRS and a PUCCH of a UE in an LTE-A system;
FIG. 4 is a schematic diagram of transmitting aperiodic SRSs two times as triggered by a signaling transmitted by a base station to a UE in an LTE-A system;
FIG. 5 is a schematic diagram of transmitting an aperiodic SRS within a TTI available for the aperiodic SRS of a UE after a time when a collision between a PUCCH and an aperiodic SRS occurs in an LTE-A system; and
FIG. 6 is a schematic diagram of a device for resolving a collision between an aperiodic SRS and an uplink control signaling according to an embodiment of the present invention.

### DESCRIPTION OF EMBODIMENTS

Procedure of a method for resolving the collision between the aperiodic SRS and the uplink control signaling according to embodiments of the present invention is as shown in FIG. 2, and includes the following steps:
Step 201: acquiring priority criteria of the aperiodic SRS and the uplink control signaling of a UE;
Step 202: receiving, by the UE, a downlink control signaling transmitted by a base station, and acquiring a time when a transmission of the aperiodic SRS is needed;
Step 203: if a transmission of the uplink control signaling through a physical uplink control channel (PUCCH) is needed at the time when the transmission of the aperiodic SRS is needed, transmitting, by the UE, the aperiodic SRS or the uplink control signaling with a higher priority at the time according to the acquired priority criteria; if the transmission of the uplink control signaling through the PUCCH is not needed at the time when the transmission of the aperiodic SRS is needed, transmitting the aperiodic SRS at the time.

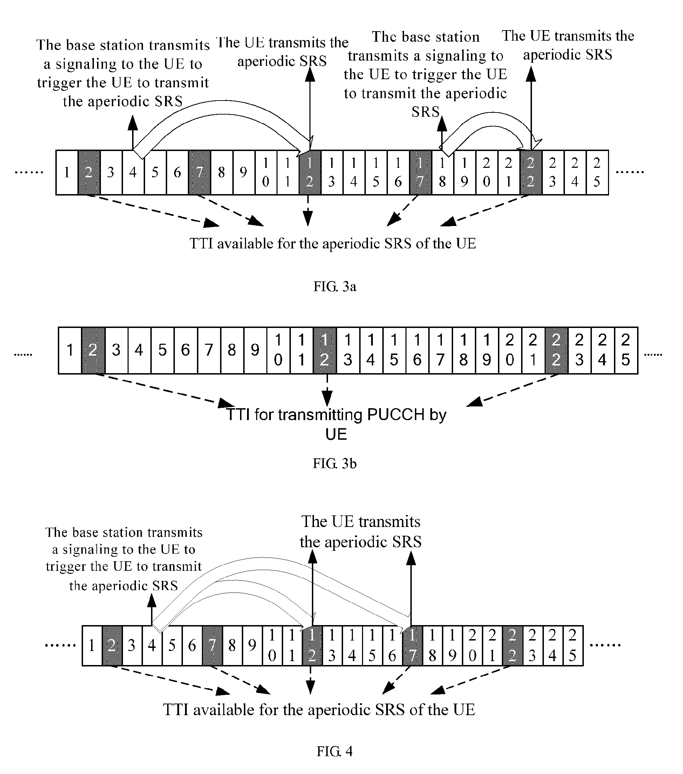

In an LTE-advanced system, the base station determines a TTI within which the aperiodic SRS can be transmitted (hereinafter, a TTI available for the aperiodic SRS) for the UE and notifies the UE through a signaling, for example, the base station determines for the UE: the TTIs available for an aperiodic SRS of the UE with a period of 5 TTIs and with 2 TTIs offset, as shown in FIG. 3a, namely, the TTIs available for the aperiodic SRS of the UE are TTIs numbered 5m+2 (m is an integer), including TTIs numbered 2, 7, 12, 17, 22,

Generally, when the base station transmits the downlink control signaling to the UE within the k-th TTI to trigger the UE to transmit the aperiodic SRS, after receiving the signaling, the UE transmits the aperiodic SRS within the first TTI available for the aperiodic SRS after k+T (including the (k+T)-th TTI). In the LTE-advanced system, T often takes the value 4, as shown in FIG. 3a. If the base station transmits the downlink control signaling to the UE within the TTI numbered 4 to trigger the UE to transmit the aperiodic SRS, after receiving the downlink control signaling transmitted by the base station, the UE transmits the aperiodic SRS within the TTI numbered 12, where the TTI numbered 12 is the first TTI available for the aperiodic SRS after 4+4=8 (including the TTI numbered 8); likewise, if the base station transmits the downlink control signaling to the UE within the TTI numbered 18 to trigger the UE to transmit the aperiodic SRS, after receiving the downlink control signaling transmitted by the base station, the UE transmits the aperiodic SRS within the TTI numbered 22, where the TTI numbered 22 is the first TTI available for the aperiodic SRS after 18+4=22 (including the TTI numbered 22).

As shown in FIG. 3b, provided that the UE needs to transmit the PUCCH within TTIs numbered 2, 12, 22, ...then a collision between the PUCCH and the aperiodic SRS may occur at these times, in this case, the UE firstly judges the priority of the aperiodic SRS and the priority of the PUCCH, and then decides to transmit the aperiodic SRS or the PUCCH within these TTIs. If the UE judges that the aperiodic SRS has a higher priority, then transmits the aperiodic SRS within these TTIs, otherwise, transmits the PUCCH.

Preferably, the uplink control signaling is characterised by having only one type of frame structure and, therefore, can not be shortened on the time.

In the LTE-advanced system, the PUCCH has two formats, format 1 and format 2, where the format 1 can be shortened on the time for transmission, so that the co-existence of both the PUCCH format 1 and the SRS in a same TTI can be supported, namely, the first 13 symbols are used for transmitting the PUCCH, the last symbol is used for transmitting the SRS, in this way, the collision between the PUCCH and the aperiodic SRS can be avoided, therefore, with respect to the PUCCH format 1, the above problem of the collision between the PUCCH and the aperiodic SRS does not exist.

However, the PUCCH format 2 cannot be transmitted in a shortened way, therefore, UE cannot transmit the aperiodic SRS and the PUCCH format 2 within the same TTI, but only can select transmitting the PUCCH format 2 or the aperiodic SRS according to the priority.

Preferably, the aperiodic SRS is characterised in that, transmitting, by the base station, the downlink control signaling to the UE at a time, can trigger the UE to transmit the aperiodic SRS at least at two times.

The action of transmitting the PUCCH by the UE is under control of the base station, for example, the base station controls the UE to transmit the PUCCH at TTIs numbered 2, 12, 22...; if transmitting, by the base station, the downlink control signaling to the UE at a time, can only trigger the UE to transmit the aperiodic SRS within one TTI, the base station can avoid the collision between the aperiodic SRS and the PUCCH by controlling the time of transmitting the downlink control signaling. For example, if the base station can control the UE to transmit the aperiodic SRS within TTIs numbered 2 and 7 by transmitting the downlink control signaling to the UE at the k-th time and the t-th time, then the base station can select when to transmit the downlink control signaling according to whether the aperiodic SRS will collide with the PUCCH, for example, the base station transmits the downlink control signaling to the UE only at the t-th time, thus controls the UE to transmit the aperiodic SRS within the TTI numbered 7, then the collision between the aperiodic SRS and PUCCH won't occur. Therefore, in a scenario that the downlink control signaling at a time triggers the UE to transmit the aperiodic SRS at a time, the degree of the collision issue between the aperiodic SRS and the PUCCH is not severe.

Since the transmitting, by the UE, of the aperiodic SRS should be triggered by the base station through the downlink control signaling, therefore, in the case of insufficient downlink control signaling, the base station can control the UE to transmit the aperiodic SRSs at least two times by transmitting the downlink control signaling to the UE at a time, so that the UE can be triggered to transmit the aperiodic SRS at least at two times through limited downlink control signaling and acquire more uplink CSI. Where the times for controlling the UE to transmit the aperiodic SRS when the base station transmits the downlink control signaling to the UE at a time, is pre-set at a UE side and a base station side, or determined by the base station and notified to the UE through a signaling. Thus, a new scenario will be introduced, that is: the downlink control signaling at a time triggers the UE to transmit the aperiodic SRSs at least at two times. For example, as shown in FIG. 4, the base station transmits the downlink control signaling to the UE within the TTI numbered 4, after receiving the signaling, the UE transmits the aperiodic SRSs within the TTIs numbered 12 and 17.

In such a scenario, the transmitting, by the base station, the downlink control signaling to the UE at a time triggers the UE to transmit the aperiodic SRSs at least at two times, the time interval for the UE to transmit the aperiodic SRSs at least at two times is often fixed during a long period of time, and therefore, it is difficult to avoid the collision between the aperiodic SRS and the PUCCH by controlling the transmitting time of the downlink control signaling. For example, as shown in FIG. 4, the base station transmits the downlink control signaling to the UE within the TTI numbered 4, and triggers the UE to transmit the aperiodic SRSs within the TTIs numbered 12 and 17, thus the collision between the aperiodic SRS and the PUCCH within the TTI numbered 12 is caused; if the base station transmits the downlink control signaling to the UE within the TTI numbered 9 and triggers the UE to transmit the aperiodic SRSs within the TTIs numbered 17 and 22, the collision between the aperiodic SRS and the PUCCH within the TTI numbered 22 is caused. Therefore, in a scenario that the downlink control signaling at a time triggers the UE to transmit the aperiodic SRS at least at two times, the degree of the collision issue between the aperiodic SRS and PUCCH is very severe, and it is necessary to apply the method provided by embodiments of the present invention.

Preferably, if the UE judges the uplink control signaling (the aperiodic SRS) has a higher priority, the UE transmits the uplink control signaling (the aperiodic SRS) at the n-th time, and transmits the aperiodic SRS (the uplink control signaling) within a TTI available for the aperiodic SRS (the uplink control signaling) after the n-th time.

This is equivalent to that, transmit the signaling with the higher priority immediately when judging that a signaling collision occurs, and transmit the signaling with the lower priority after a time delay, so as to avoid the collision.

Hereinafter, "transmitting the aperiodic SRS within a TTI available for the aperiodic SRS after the n-th time" is taken as an example for illustration only. The principle of "transmitting the uplink control signaling within a TTI available for the uplink control signaling after the n-th time" is similar to those of the above, and no further details are given here.

Since the action of transmitting the aperiodic SRS by the UE should be triggered by the base station by transmitting the downlink control signaling to the UE, and the downlink control signaling resources are insufficient at many times, therefore, if the aperiodic SRS is not transmitted because that the PUCCH has a higher priority, it will cause the function of the downlink control signaling for triggering the aperiodic SRS to be invalid.

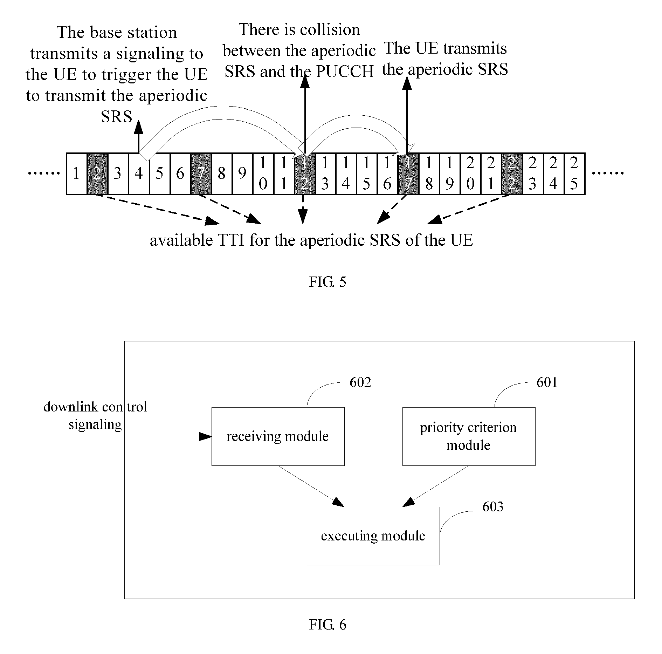

To avoid this situation, if the UE judges the uplink control signaling has the higher priority, the UE transmits the uplink control signaling at the n-th time, and transmits the aperiodic SRS within a TTI available for the aperiodic SRS after the n-th time. For example, as shown in FIG. 5, when there is no collision between the PUCCH and the aperiodic SRS, the base station transmits the downlink control signaling to the UE within the TTI numbered 4 and triggers the UE to transmit the aperiodic SRS, after receiving the signaling, the UE transmits the aperiodic SRS within the TTI numbered 12; when there is a collision between the PUCCH and the aperiodic SRS, the base station transmits the downlink control signaling to the UE within the TTI numbered 4 and triggers the UE to transmit the aperiodic SRS, after receiving the signaling, the UE finds that the PUCCH also needs to be transmitted within the TTI numbered 12, then the UE transmits the PUCCH within the TTI numbered 12 and transmits the aperiodic SRS within the next TTI available for the aperiodic SRS, namely, the UE transmits the aperiodic SRS within the TTI numbered 17.

Preferably, in particular, the TTI available for the aperiodic SRS (the uplink control signaling) after the n-th time is the first TTI available for the aperiodic SRS (the uplink control signaling) with no collision with the uplink control signaling (the aperiodic SRS). Such can guarantee the delay time of the signaling with the lower priority is as short as possible.

For the above example, if there is also a collision between the aperiodic SRS and the PUCCH within the TTI numbered 17, and there is no collision between the aperiodic SRS and the PUCCH within the TTI numbered 22, the UE transmits the aperiodic SRS within the TTI numbered 22.

For the scenario that the downlink control signaling transmitted by the base station to the UE at a time triggers the UE to transmit the aperiodic SRS at least at two times, if a subsequent aperiodic SRS is originally needed to be transmitted after the n-th time, and the aperiodic SRS transmitted at the n-th time is delayed until the TTI available for the aperiodic SRS after the n-th time, the subsequent aperiodic SRS is postponed to the subsequent TTI available for the aperiodic SRS. For example, the base station transmits the downlink control signaling to the UE within the TTI numbered 4 and triggers the UE to transmit the aperiodic SRSs within the TTIs numbered 12 and 17; if a collision between the PUCCH and the aperiodic SRS occurs within the TTI numbered 12, and no collision between the PUCCH and the aperiodic SRS occurs within the TTIs numbered 17 and 22, the aperiodic SRS originally transmitted within the TTI numbered 12 is delayed to be transmitted within the TTI numbered 17, and the aperiodic SRS originally transmitted within the TTI numbered 17 is delayed to be transmitted within the TTI numbered 22.

Preferably, in particular, if a TTI available for the aperiodic SRS (the uplink control signaling) with no collision with the uplink control signaling (the aperiodic SRS) exists within a time window of a length m after the TTI numbered n, the aperiodic SRS (the uplink control signaling) is transmitted within the first TTI available for the aperiodic SRS (the uplink control signaling) with no collision with the uplink control signaling (the aperiodic SRS), otherwise, the aperiodic SRS (the uplink control signaling) is not transmitted. The reason for this is to avoid a too long delay time of the signaling with a lower priority.

For example, provided that the time window is within m=10 TTIs after the TTI numbered n, that is, the TTIs within the time window are numbered [n+1, n+10]. If there is a TTI available for the aperiodic SRS with no collision with the PUCCH within the time window, the aperiodic SRS is transmitted within the first TTI described above, otherwise, the aperiodic SRS is not transmitted. For the above example, n=12, if there is a TTI available for the aperiodic SRS with no collision with the PUCCH within the time window including TTIs numbered [13,22], for example, there is no collision between the aperiodic SRS and the PUCCH within the TTIs numbered 17 and 22, the aperiodic SRS is transmitted within the TTI numbered 17; and if all the TTIs available for the aperiodic SRS within the time window including TTIs numbered [13,22] will collide with the PDCCH, for example, there is a collision between the aperiodic SRS and the PUCCH within the TTIs numbered 17 and 22, the aperiodic SRS is not transmitted by the UE.

Preferably, the size of the time window is pre-set at the UE side and the base station side, or the time window is set through transmitting signaling by the base station to the UE.

For example, the size of the time window is 10 TTIs and may be pre-set at the UE side and the base station side, or the size of the time window may be set by the base station, which particularly is set through transmitting a signaling by the base station to the UE.

Preferably, the criteria according to which the UE judges the priorities of the aperiodic SRS and the uplink control signaling are transmitted by the base station to the UE.

For example, the base station transmits a criteria signaling to the UE, which includes 2 bits, and the mapping relationship between the contents of the criteria signaling and the 2-bit value is as shown in Table 1:

**Table 1**

| Value of the criteria signaling | Content of Signaling |
|---|---|
| 00 | The priority of the aperiodic SRS is higher than the priority of the PUCCH, the UE transmits the aperiodic SRS within a TTI numbered n, and doesn't transmit the PUCCH |
| 01 | The priority of the aperiodic SRS is lower than the priority of the PUCCH, the UE transmits the PUCCH within a TTI numbered n, and doesn't transmit the aperiodic SRS |
| 10 | The priority of the aperiodic SRS is higher than the priority of the PUCCH, the UE transmits the aperiodic SRS within a TTI numbered n, and transmits the uplink control signaling within a TTI available for the uplink control signaling after the n-th time |
| 11 | The priority of the aperiodic SRS is lower than the priority of the PUCCH, the UE transmits the PUCCH within a TTI numbered n, and transmits the aperiodic SRS within a TTI available for the aperiodic SRS after the n-th time |

Thus, if the criteria signaling transmitted by the base station to the UE is 00, it indicates the priority of the aperiodic SRS is higher than the priority of the PUCCH, the UE transmits the aperiodic SRS within a TTI numbered n, and doesn't transmit the PUCCH; and so forth.

Preferably, the criteria according to which the UE judges the priorities of the aperiodic SRS and the uplink control signaling are pre-set at the UE side and the base station side.

The value of the criteria may be pre-set at the UE side and the base station side, so that the above signaling is not needed and thus a benefit of saving signaling overhead can be achieved.

The criteria for judging the priorities of the aperiodic SRS and the uplink control signaling may be any one or any combination of the following criteria:
[Criterion 1] If the uplink control signaling is configured to transmit ACK/NAK information or rank indicator (Rank Indicator, RI) information, the priority of the uplink control signaling is higher than the priority of the aperiodic SRS. Otherwise, the priority of the aperiodic SRS is higher than the priority of the uplink control signaling.

The uplink control signaling generally transmits ACK/NAK information or downlink CSI information.

ACK/NAK information: after the base station transmits the downlink data to the UE, the UE will feed back a response to the base station after receiving the downlink data. If the UE decodes the data transmitted by the base station correctly, feeds back an acknowledgement (ACK), otherwise, feeds back a non-acknowledgement (NAK). Upon receiving the ACK/NAK, the base station can know that whether the UE decodes correctly the data transmitted previously, and may decide to retransmit the data or transmit new data to the UE subsequently.

Downlink CSI information: the UE can know the downlink channel state information (CSI) by detecting the downlink signal transmitted by the base station, and the CSI information includes a channel quality indicator (Channel Quality Indicator, CQI), a precoding matrix indicator (Precoding Matrix Indicator, PMI), a rank indicator (RI), where the CQI indicates the modulation and coding scheme (Modulation and Coding Scheme, MCS) for the downlink transmission recommended by the UE, the PMI indicates the index of the precoding matrix for the downlink transmission recommended by the UE, and the RI indicates the number of transmission layers for the downlink transmission recommended by the UE.

Because the base station needs to determine to retransmit the data or transmit new data to the UE subsequently according to the ACK/NAK, and the RI fed back by the UE directly affects the number of layers of the downlink transmission determined by the base station, which has a critical role to the downlink transmission rate, therefore, the priorities of them are high, if the PUCCH is configured to transmit the ACK/NAK information or the RI, the UE transmits the PUCCH, rather than the aperiodic SRS, within a TTI numbered n.

Otherwise, the priority of the aperiodic SRS is higher than the priority of the PUCCH, the UE transmits the aperiodic SRS, rather than the PUCCH, within a TTI numbered n. The situation for "otherwise" in the embodiments below are similar to those of the above, and no further details are given here.
[Criterion 2] If the uplink control signaling is configured to transmit rank indicator (RI) information and RI information needed to be transmitted by the UE is different from RI information transmitted most recently before the n-th time, the priority of the uplink control signaling is higher than the priority of the aperiodic SRS. Otherwise, the priority of the aperiodic SRS is higher than the priority of the uplink control signaling.

For example, n=12, the UE has transmitted the PUCCH to the base station within the TTI numbered 2 before the TTI numbered 12, in which the RI value is 2; if the UE needs to feed back an RI=1 within the TTI numbered 12, the RI values transmitted by the UE to the base state at the two times are different, thus the priority of the PUCCH is higher than the priority of the aperiodic SRS, the UE transmits the PUCCH, rather than the aperiodic SRS within a TTI numbered n. Otherwise, if RI value needed to be fed back by the UE within the TTI numbered 12 is also 2, that is, the RI values transmitted by the UE to the base state at these two times are the same, thus the base station can use the RI value fed back at the last time as the CSI of the downlink transmission. Retransmitting the RI value with the same contents is not needed. In this case, the priority of the aperiodic SRS is higher than the priority of the PUCCH, the UE transmits the aperiodic SRS, rather than the PUCCH, within a TTI numbered n.
[Criterion 3] If the uplink control signaling is configured to transmit broadband channel state information, the priority of the uplink control signaling is higher than the priority of the aperiodic SRS. Otherwise, the priority of the aperiodic SRS is higher than the priority of the uplink control signaling.

The existing communication system usually has a large bandwidth, the CSI fed back by the UE also includes a broadband CSI and a sub-band CSI, where the broadband CSI reflects channel state information of the overall system bandwidth, the sub-band CSI only reflects channel state information of a partial system bandwidth; the sub-band CSI is usually calculated by performing a slightly offset based on the broadband CSI, the UE only needs to feed back the offset, and thus the feedback overhead can be reduced.

Therefore, the broadband CSI plays a rather important role, if the PUCCH is configured to transmit channel state information of the broadband, the priority of the PUCCH is higher than the priority of the aperiodic SRS, then the UE transmits the PUCCH, rather than the aperiodic SRS, within a TTI numbered n.
[Criterion 4] If the uplink control signaling is transmitted periodically and the period of the transmission of the uplink control signaling is greater than a preset period threshold value, the priority of the uplink control signaling is higher than the priority of the aperiodic SRS, otherwise, the priority of the aperiodic SRS is higher than the priority of the uplink control signaling. Where the period threshold value may be pre-set at the UE side and the base station side, or configured through transmitting a signaling by the base station to the UE.

The PUCCH may be periodic, if the period of the PUCCH is large, the UE will transmit the PUCCH at a long time intervals; if the PUCCH is not transmitted because of the collision between the PUCCH and the aperiodic SRS, the base station can not acquire the downlink CSI in time. In this case, the priority of the PUCCH is higher than the priority of the aperiodic SRS, thus the UE transmits the PUCCH, rather than the aperiodic SRS, within a TTI numbered n. Where, the threshold value may be pre-set at the UE side and the base station side, which can save signaling; or configured through transmitting a signaling by the base station to the UE, which is more flexible.
[Criterion 5] If a payload of the uplink control signaling is greater than a preset load threshold value, the priority of the uplink control signaling is higher than the priority of the aperiodic SRS, otherwise, the priority of the aperiodic SRS is higher than the priority of the uplink control signaling.

Where, the load threshold value may be pre-set at the UE side and the base station side, or configured through transmitting a signaling by the base station to the UE.

The PUCCH is configured to transmit the uplink control signaling, and the payload (payload) of the PUCCH may be variable in size, for example, in terms of the ACK/NAK, if each data packet transmitted in downlink needs one bit to indicate the ACK/NAK, different numbers of the data packets transmitted in downlink will cause a change of the size of the payload; in terms of the CSI feedback, if the PUCCH is configured to feed back the CQI and the PMI, the payload is large; if the PUCCH is only configured to feed back CQI, the payload is small. If the payload of the PUCCH is greater than a certain threshold value, the data amount to be transmitted by the PUCCH is large, thus the priority of the PUCCH is higher than the priority of the aperiodic SRS, then the UE transmits the PUCCH, rather than the aperiodic SRS, within a TTI numbered n. Where, the threshold value may be pre-set at the UE side and the base station side, which can save signaling; or configured through transmitting a signaling by the base station to the UE, which is more flexible.
[Criterion 6] If strength of a signal received by the UE from the base station is greater than a preset signal strength threshold value, the priority of the uplink control signaling is higher than the priority of the aperiodic SRS, otherwise, the priority of the aperiodic SRS is higher than the priority of the uplink control signaling.

Where, the signal strength threshold value may be pre-set at the UE side and the base station side, or configured through transmitting a signaling by the base station to the UE.

The UE generally detects the signal received from the base station, and calculates the strength of the received signal, for example, in the LTE system, the UE calculates a reference signal received power (Reference Signal Received Power, RSRP) and feeds back the value to the base station. If the RSRP value calculated by the UE is greater than a certain threshold value, it represents that the UE is located at the center of the cell, and the channel state of the UE is applicable to a downlink high-speed data transmission, thus the UE needs to feed back the downlink CSI accurately and immediately, therefore, the PUCCH is rather important, the priority of the PUCCH is higher than the priority of the aperiodic SRS, then the UE transmits the PUCCH, rather than the aperiodic SRS, within a TTI numbered n. Where, the threshold value may be pre-set at the UE side and the base station side, which can save signaling; or configured through transmitting a signaling by the base station to the UE, which is more flexible.
[Criterion 7] The aperiodic SRS and the uplink control signaling have a priority higher than the other alternatively.

The criterion will lead to the following case: within successive n1 TTIs, the uplink control signaling has a priority higher than the priority of the aperiodic SRS; within next successive n2 TTIs, the aperiodic SRS has a priority higher than the priority of the uplink control signaling; and within next successive n3 TTIs, the uplink control signaling has a priority higher than the priority of the aperiodic SRS, and so forth. In particular, n1 = n2 = n3=...=1.

If the uplink control signaling has the priority higher than the priority of the aperiodic SRS within the TTIs numbered n according to the given alternative rule, the priority of the uplink control signaling is higher than the priority of the aperiodic SRS. Otherwise, the priority of the aperiodic SRS is higher than the priority of the uplink control signaling. Where, frequency of the alternation may be pre-set at the UE side and the base station side, or configured through transmitting a signaling by the base station to the UE.

The "alternating" may occur within all the TTIs, for example, the priority of the aperiodic SRS is higher than the priority of the PUCCH within even numbered TTIs; and the priority of the PUCCH is higher than the priority of the aperiodic SRS within odd numbered TTIs. If n=12, the priority of the aperiodic SRS is higher than the priority of the PUCCH, then the UE transmits the aperiodic SRS, rather than the PUCCH, within a TTI numbered n; if n=17, the priority of the PUCCH is higher than the priority of the aperiodic SRS, and then the UE transmits the PUCCH, rather than the aperiodic SRS, within a TTI numbered n.

Or, the "alternating" may occur within TTIs when there is a collision between the PUCCH and the aperiodic SRS, for example, the PUCCH will collide with the aperiodic SRS within the TTIs numbered 2, 12, 22..., therefore, if n=2, the priority of the aperiodic SRS is higher than the priority of the PUCCH, then the UE transmits the aperiodic SRS, rather than the PUCCH, within a TTI numbered n; if n=12, the priority of the PUCCH is higher than the aperiodic SRS, and then the UE transmits the PUCCH, rather than the aperiodic SRS, within a TTI numbered n.

In this manner, equal opportunity for transmitting the aperiodic SRS and the PUCCH by the UE can be guaranteed.

Furthermore, the frequency for transmitting the aperiodic SRS and the PUCCH by the UE may be different, for example, the PUCCH will collide with the aperiodic SRS within the TTIs numbered 2, 12, 22..., therefore, if n=2 or 12, the priority of the aperiodic SRS is higher than the priority of the PUCCH, then the UE transmits the aperiodic SRS, rather than the PUCCH, within a TTI numbered n; if n=22, the priority of the PUCCH is higher than the priority of the aperiodic SRS, and then the UE transmits the PUCCH, rather than the aperiodic SRS, within a TTI numbered n. In this way, the UE can transmit the aperiodic SRS or the PUCCH with a higher probability by practical considerations.

Where, the frequency of the alternation may be pre-set at the UE side and the base station side, which can save signaling; or configured through transmitting a signaling by the base station to the UE, which is more flexible.
[Criterion 8] If the UE is configured with a special mode by the base station, the priority of the uplink control signaling is higher than the priority of the aperiodic SRS. Otherwise, the priority of the aperiodic SRS is higher than the priority of the uplink control signaling. Where, the special mode includes a downlink multiple-input-multiple-output (MIMO) transmission mode, a feedback mode or an uplink MIMO transmission mode.

For example, the downlink MIMO transmission mode includes a single antenna port (Single Antenna Port, SAP) mode, a transmit diversity (Transmit Diversity, TD) mode, a closed-loop spatial multiplexing (Closed-Loop Spatial Multiplexing, CLSM) mode, an open-loop spatial multiplexing (Open-Loop Spatial Multiplexing, OLSM) mode and so on. If the base station configures the downlink MIMO transmission mode of the UE to be the closed-loop spatial multiplexing mode, which needs more CSI feedback information, the priority of the PUCCH is higher than the priority of the aperiodic SRS; if the base station configures the downlink MIMO transmission mode of the UE to be the single antenna port mode, which has low requirement for the CSI feedback information, the priority of the aperiodic SRS is higher than the priority of the PUCCH.

For example, the feedback mode includes a non-adaptive feedback mode and an adaptive feedback mode; if the base station configures the UE to be in the non-adaptive feedback mode, the UE feeds back the CSI of the broadband or some sub-bands according to the given rule; if the base station configures the UE to be in the adaptive feedback mode, the UE selects at least one optimal sub-band based on the calculated CSIs of a plurality of sub-bands, and feeds back the indices of the sub-band and the CSI corresponding to the sub-band to the base station. If the base station configures the feedback mode of the UE to be the adaptive feedback mode, since the UE can feed back different sub-bands and CSIs corresponding to the sub-bands according to the channel change in this mode, the priority of the PUCCH is higher than the priority of the aperiodic SRS; if the base station configures the feedback mode of the UE to be the non-adaptive feedback mode, since the UE can periodically feed back the CSI of the broadband or some sub-bands according to the given rule, the requirement to the PUCCH is low, and thus the priority of the aperiodic SRS is higher than the priority of the PUCCH.

For example, the uplink MIMO transmission mode includes a single antenna mode and a multiple antenna mode. If the base station configures the uplink MIMO transmission mode of the UE to be a single antenna mode, since such mode has low requirement for the uplink CSI, the priority of the PUCCH is higher than the priority of the aperiodic SRS; if the base station configures the uplink MIMO transmission mode of the UE to be a multiple antenna mode, since such mode has high requirement for the uplink CSI, the priority of the aperiodic SRS is higher than the priority of the PUCCH.

As shown in FIG. 6, embodiments of the present invention provide a device for resolving the collision between the aperiodic SRS and the uplink control signaling, where the device is located in the UE, and includes:
a priority criterion module 601, configured to acquire and save priority criteria of the aperiodic SRS and the uplink control signaling of the UE;
a receiving module 602, configured to receive a downlink control signaling transmitted by a base station, and acquire a time when a transmission of the aperiodic SRS is needed; and
an executing module 603, configured to: if transmission of the uplink control signaling through a physical uplink control channel (PUCCH) is needed at the time when the transmission of the aperiodic SRS is needed, transmit, by the UE, the aperiodic SRS or the uplink control signaling with a higher priority at the time according to the set priority criteria; if the transmission of the uplink control signaling through the PUCCH is not needed at the time when the transmission of the aperiodic SRS is needed, transmit the aperiodic SRS at the time.

Preferably, the executing module 603 includes:
a judging unit, configured to judge whether the transmission of the uplink control signaling through the PUCCH is needed at the time when the transmission of the aperiodic SRS is needed acquired by the receiving module, if no, enable an aperiodic SRS transmitting unit at the time; if yes, judge a priority of the aperiodic SRS and a priority of the uplink control signaling according to the priority criteria saved in the priority criterion module, enable the aperiodic SRS transmitting unit at the time if the priority of the aperiodic SRS is higher; and enable an uplink control signaling transmitting unit at the time if the priority of the uplink control signaling is higher;
the aperiodic SRS transmitting unit, configured to transmit the aperiodic SRS in an enabled state; and
the uplink control signaling transmitting unit, configured to transmit the uplink control signaling in the enabled state.

Preferably, the uplink control signaling is an uplink control signaling with a format of a single frame structure.

Preferably, the receiving, by the receiving module, the downlink control signaling transmitted by the base station, and acquiring the time when the transmission of the aperiodic SRS is needed, is:
receiving, by the receiving module, one downlink control signaling transmitted by the base station, and acquiring at least two times when the transmission of the aperiodic SRS is needed.

Preferably, the judging unit is further configured to enable the aperiodic SRS transmitting unit within a transmission time interval (TTI) available for the aperiodic SRS after the time, after enabling the uplink control signaling transmitting unit at the time when the judging unit judges that the priority of the uplink control signaling is higher.

Preferably, the transmission time interval (TTI) available for the aperiodic SRS is:
a first TTI available for the aperiodic SRS with no collision with the uplink control signaling after the time.

Preferably, the judging unit further includes: a first judging subunit, configured to: after the judging unit judges that the priority of the uplink control signaling is higher, and enables the uplink control signaling transmitting module at the time,
judge whether a TTI available for the aperiodic SRS with no collision with the uplink control signal exists within a time window of a length m after the time, if yes, enable the aperiodic SRS transmitting module within a first TTI available for the aperiodic SRS with no collision with the uplink control signaling after the time.

Preferably, the length of the time window is pre-set at a UE side and a base station side, or the time window is set through transmitting a signaling by the base station to the UE.

Preferably, the priority criterion module includes:
a signaling receiving unit, configured to receive a signaling carrying the priority criteria of the aperiodic SRS and the uplink control signaling from the base station;
a priority setting unit, configured to take the priority criteria of the aperiodic SRS and the uplink control signaling in the signaling received by the signaling receiving unit as the priority criteria of the aperiodic SRS and the uplink control signaling of the priority criterion module.

Preferably, the priority criteria of the aperiodic SRS and the uplink control signaling include any one or any combination of the following priority criteria:
if the uplink control signaling is configured to transmit ACK/NAK information or rank indicator information, the priority of the uplink control signaling is higher than the priority of the aperiodic SRS; otherwise, the priority of the aperiodic SRS is higher than the priority of the uplink control signaling;
if the uplink control signaling is configured to transmit rank indicator (RI) information and RI information needed to be transmitted by the UE is different from RI information transmitted most recently before a n-th time, the priority of the uplink control signaling is higher than the priority of the aperiodic SRS; otherwise, the priority of the aperiodic SRS is higher than the priority of the uplink control signaling;
if the uplink control signaling is configured to transmit channel state information of a broadband, the priority of the uplink control signaling is higher than the priority of the aperiodic SRS; otherwise, the priority of the aperiodic SRS is higher than the priority of the uplink control signaling;
if the uplink control signaling is transmitted periodically and a period of the transmission of the uplink control signaling is greater than a preset period threshold value, the priority of the uplink control signaling is higher than the priority of the aperiodic SRS, otherwise, the priority of the aperiodic SRS is higher than the priority of the uplink control signaling;
if a payload of the uplink control signaling is greater than a preset load threshold value, the priority of the uplink control signaling is higher than the priority of the aperiodic SRS, otherwise, the priority of the aperiodic SRS is higher than the priority of the uplink control signaling;
if strength of a signal received by a UE from the base station is greater than a preset signal strength threshold value, the priority of the uplink control signaling is higher than the priority of the aperiodic SRS, otherwise, the priority of the aperiodic SRS is higher than the priority of the uplink control signaling;
the aperiodic SRS and the uplink control signaling have a priority higher than the other alternatively;
if the UE is configured with a special mode by the base station, the priority of the uplink control signaling is higher than the priority of the aperiodic SRS, otherwise, the priority of the aperiodic SRS is higher than the priority of the uplink control signaling; where the special mode includes a downlink multiple-input-multiple-output (MIMO) transmission mode, a feedback mode and an uplink MIMO transmission mode.

Embodiments of the present invention also provide a method for resolving the collision between the aperiodic SRS and the uplink control signaling, including the following steps of:
configuring, by the base station, priority criteria of the aperiodic SRS and the uplink control signaling;
transmitting, by the base station to the UE, a downlink control signaling to the UE, wherein the downlink control signaling is used to notify the UE of a time when a transmission of the aperiodic SRS is needed;
if a reception of the uplink control signaling through a physical uplink control channel (PUCCH) is needed at a receiving time corresponding to the time when the transmission of the aperiodic SRS is needed, receiving, by the base station, the aperiodic SRS or the uplink control signaling with a higher priority at the receiving time according to the acquired priority criteria; if the reception of the uplink control signaling through the PUCCH is not needed at the receiving time when the transmission of the aperiodic SRS is needed, receiving the aperiodic SRS at the receiving time.

Preferably, the downlink control signaling carries at least two times when the transmission of the aperiodic SRS is needed.

Preferably, if the base station receives the uplink control signaling with the higher priority at the time, after the time, the method further includes:
receiving, by the base station, the aperiodic SRS within a transmission time interval (TTI) available for the aperiodic SRS after the receiving time.

Preferably, the method further includes: transmitting, by the base station, a signaling to the UE to set a time window of a length m.

Preferably, the priority criteria of the aperiodic SRS and the uplink control signaling include any one of the following priority criteria:
if the uplink control signaling is configured to transmit ACK/NAK information or rank indicator information, a priority of the uplink control signaling is higher than a priority of the aperiodic SRS; otherwise, the priority of the aperiodic SRS is higher than the priority of the uplink control signaling;
if the uplink control signaling is configured to transmit rank indicator (RI) information and RI information transmitted by the UE is different from RI information transmitted most recently before a n-th time, the priority of the uplink control signaling is higher than the priority of the aperiodic SRS; otherwise, the priority of the aperiodic SRS is higher than the priority of the uplink control signaling;
if the uplink control signaling is configured to transmit channel state information of a broadband, the priority of the uplink control signaling is higher than the priority of the aperiodic SRS; otherwise, the priority of the aperiodic SRS is higher than the priority of the uplink control signaling;
if the uplink control signaling is transmitted periodically and a period of the transmission of the uplink control signaling is greater than a preset period threshold value, the priority of the uplink control signaling is higher than the priority of the aperiodic SRS, otherwise, the priority of the aperiodic SRS is higher than the priority of the uplink control signaling;
if a payload of the uplink control signaling is greater than a preset load threshold value, the priority of the uplink control signaling is higher than the priority of the aperiodic SRS, otherwise, the priority of the aperiodic SRS is higher than the priority of the uplink control signaling;
if strength of a signal received by a UE from the base station is greater than a preset strength threshold value, the priority of the uplink control signaling is higher than the priority of the aperiodic SRS, otherwise, the priority of the aperiodic SRS is higher than the priority of the uplink control signaling;
the aperiodic SRS and the uplink control signaling have a priority higher than the other alternatively;
if the UE is configured with a special mode by the base station, the priority of the uplink control signaling is higher than the priority of the aperiodic SRS, otherwise, the priority of the aperiodic SRS is higher than the priority of the uplink control signaling; where the special mode includes a downlink multiple-input-multiple-output (MIMO) transmission mode, a feedback mode and an uplink MIMO transmission mode.

Embodiments of the present invention also provide another device for resolving the collision between the aperiodic SRS and the uplink control signaling, where the device is loacated in a base station side, and includes:
a priority criterion module, configured to configure priority criteria of the aperiodic SRS and the uplink control signaling;
a signaling transmitting module, configured to transmit a signaling carrying the priority criteria of the aperiodic SRS and the uplink control signaling set by the priority criterion module to a user equipment (UE); and configured to transmit a downlink control signaling to the UE, where the downlink control signaling is used to notify the UE of a time when a transmission of the aperiodic SRS is needed;
an receiving module, configured to receive the uplink control signaling or the aperiodic SRS at a receiving time corresponding to the time when the transmission of the aperiodic SRS is needed, particularly comprising: if a reception of the uplink control signaling through a physical uplink control channel (PUCCH) is needed at the time when the transmission of the aperiodic SRS is needed, receiving, by the base station, the aperiodic SRS or the uplink control signaling with a higher priority at the receiving time according to the acquired priority criteria; if the reception of the uplink control signaling through the PUCCH is not needed at the time when the transmission of the aperiodic SRS is needed, receiving the aperiodic SRS at the receiving time.

Preferably, the downlink control signaling carries at least two times when the transmission of the aperiodic SRS is needed.

Preferably, the receiving module is further configured to receive the aperiodic SRS within a transmission time interval (TTI) available for the aperiodic SRS after the receiving time.

Preferably, the device further includes:
a time window configuring module, configured to configure a time window of a length m;
the signaling transmitting module is further configured to notify the UE of the time window set by the time window configuring module through a signaling.

Preferably, the priority criteria of the aperiodic SRS and the uplink control signaling comprise any one or any combination of the following priority criteria:
if the uplink control signaling is configured to transmit ACK/NAK information or rank indicator information, a priority of the uplink control signaling is higher than a priority of the aperiodic SRS; otherwise, the priority of the aperiodic SRS is higher than the priority of the uplink control signaling;
if the uplink control signaling is configured to transmit rank indicator (RI) information and RI information needed to be transmitted by the UE is different from RI information transmitted most recently before a n-th time, the priority of the uplink control signaling is higher than the priority of the aperiodic SRS; otherwise, the priority of the aperiodic SRS is higher than the priority of the uplink control signaling;
if the uplink control signaling is configured to transmit channel state information of a broadband, the priority of the uplink control signaling is higher than the priority of the aperiodic SRS; otherwise, the priority of the aperiodic SRS is higher than the priority of the uplink control signaling;
if the uplink control signaling is transmitted periodically and a period of the transmission of the uplink control signaling is greater than a preset period threshold value, the priority of the uplink control signaling is higher than the priority of the aperiodic SRS, otherwise, the priority of the aperiodic SRS is higher than the priority of the uplink control signaling;
if a payload of the uplink control signaling is greater than a preset load threshold value, the priority of the uplink control signaling is higher than the priority of the aperiodic SRS, otherwise, the priority of the aperiodic SRS is higher than the priority of the uplink control signaling;
if strength of a signal received by a UE from the base station is greater than a preset signal strength threshold value, the priority of the uplink control signaling is higher than the priority of the aperiodic SRS, otherwise, the priority of the aperiodic SRS is higher than the priority of the uplink control signaling;
the aperiodic SRS and the uplink control signaling have a priority higher than the other alternatively;
if the UE is configured with a special mode by the base station, the priority of the uplink control signaling is higher than the priority of the aperiodic SRS, otherwise, the priority of the aperiodic SRS is higher than the priority of the uplink control signaling; where the special mode includes a downlink multiple-input-multiple-output (MIMO) transmission mode, a feedback mode and an uplink MIMO transmission mode.

Finally, it should be understood that the above embodiments are merely some preferable embodiments of the present invention, but not to limit the technical solution of the present invention, and various modifications, changes or equivalent replacements within the spirit and principle of the present invention shall fall within the protection scope of the present invention.

## Claims

1. A method for resolving a collision between an aperiodic sounding reference signal (SRS) and an uplink control signaling, comprising the following steps of:
acquiring priority criteria of the aperiodic SRS and the uplink control signaling of a user equipment (UE);
receiving, by the UE, a downlink control signaling transmitted by a base station, and acquiring a time when a transmission of the aperiodic SRS is needed;
if a transmission of the uplink control signaling through a physical uplink control channel (PUCCH) is needed at the time when the transmission of the aperiodic SRS is needed, transmitting, by the UE, the aperiodic SRS or the uplink control signaling with a higher priority at the time according to the acquired priority criteria; if the transmission of the uplink control signaling through the PUCCH is not needed at the time when the transmission of the aperiodic SRS is needed, transmitting the aperiodic SRS at the time.

2. The method according to claim 1, wherein the uplink control signaling is an uplink control signaling with a format of a single frame structure.

3. The method according to claim 1, wherein the receiving, by the UE, the downlink control signaling transmitted by the base station, and acquiring the time when the transmission of the aperiodic SRS is needed, is:
receiving, by the UE, one downlink control signaling transmitted by the base station, and acquiring at least two times when the transmission of the aperiodic SRS is needed.

4. The method according to claim 1, after transmitting the uplink control signaling with the higher priority at the time, further comprising:
transmitting the aperiodic SRS within a transmission time interval (TTI) available for the aperiodic SRS after the time.

5. The method according to claim 4, wherein the transmission time interval (TTI) available for the aperiodic SRS is:
a first TTI available for the aperiodic SRS with no collision with the uplink control signaling after the time.

6. The method according to claim 1, after transmitting the uplink control signaling with the higher priority at the time, further comprising:
judging whether a TTI available for the aperiodic SRS with no collision with the uplink control signaling exists within a time window of a length m after the time, if yes, transmitting the aperiodic SRS within a first TTI available for the aperiodic SRS with no collision with the uplink control signaling after the time; otherwise, giving up to transmit the aperiodic SRS.

7. The method according to claim 6, wherein a length of the time window is pre-set at a UE side and a base station side, or the time window is set through transmitting a signaling by the base station to the UE.

8. The method according to claim 1, wherein the acquiring the priority criteria of the aperiodic SRS and the uplink control signaling of the user equipment (UE) is:
receiving, by the UE, a signaling carrying the priority criteria of the aperiodic SRS and the uplink control signaling from the base station, and taking the priority criteria of the aperiodic SRS and the uplink control signaling in the signaling as a priority criteria of the aperiodic SRS and the uplink control signaling of the UE itself; or
pre-setting the priority criteria of the aperiodic SRS and the uplink control signaling in the UE.

9. The method according to any one of claims 1-9, wherein the priority criteria of the aperiodic SRS and the uplink control signaling comprise any one or any combination of following priority criteria:
if the uplink control signaling is configured to transmit ACK/NAK information or rank indicator information, a priority of the uplink control signaling is higher than a priority of the aperiodic SRS; otherwise, the priority of the aperiodic SRS is higher than the priority of the uplink control signaling;
if the uplink control signaling is used to transmit rank indicator (RI) information and RI information needed to be transmitted by the UE is different from RI information transmitted most recently before a n-th time, the priority of the uplink control signaling is higher than the priority of the aperiodic SRS; otherwise, the aperiodic SRS has a priority higher than the uplink control signaling;
if the uplink control signaling is used to transmit broadband channel state information, the priority of the uplink control signaling is higher than the priority of the aperiodic SRS; otherwise, the priority of the aperiodic SRS is higher than the priority of the uplink control signaling;
if the uplink control signaling is transmitted periodically and a period of the transmission of the uplink control signaling is larger than a preset period threshold value, the priority of the uplink control signaling is higher than the priority of the aperiodic SRS, otherwise, the priority of the aperiodic SRS is higher than the uplink control signaling;
if a payload size of the uplink control signaling is greater than a preset load threshold value, the priority of the uplink control signaling is higher than the priority of the aperiodic SRS, otherwise, the priority of the aperiodic SRS is higher than the priority of the uplink control signaling;
if streength of a signal received by a UE from the base station is greater than a preset signal streength threshold value, the priority of the uplink control signaling is higher than the priority of the aperiodic SRS, otherwise, the priority of the aperiodic SRS is higher than the priority of the uplink control signaling;
the aperiodic SRS and the uplink control signaling have a priority higher than the other alternatively;
if the UE is configured with a special mode by the base station, the priority of the uplink control signaling is higher than the priority of the aperiodic SRS, otherwise, the priority of the aperiodic SRS is higher than the priority of the uplink control signaling; wherein the special mode comprises a downlink multiple-input-multiple-output (MIMO) transmission mode, a feedback mode and an uplink MIMO transmission mode.

10. The method according to claim 1, after the receiving, by the UE, the downlink control signaling transmitted by the base station, and acquiring the time when the transmission of the aperiodic SRS is needed, further comprising:
judging, by the UE, whether the transmission of the uplink control signaling through the PUCCH is needed at the time when the transmission of the aperiodic SRS is needed, if no, transmitting the aperiodic SRS at the time; if yes, transmitting the aperiodic SRS at the time if a priority of the aperiodic SRS is higher, and transmitting the uplink control signaling if a priority of the uplink control signaling is higher.

11. A device for resolving a collision between an aperiodic sounding reference signal (SRS) and an uplink control signaling, wherein the device is located in a user equipment (UE), and comprises:
a priority criterion module, configured to acquire and save priority criteria of the aperiodic SRS and the uplink control signaling of the UE;
a receiving module, configured to receive a downlink control signaling transmitted by a base station, and acquire a time when a transmission of the aperiodic SRS is needed; and
an executing module, configured to: if a transmission of the uplink control signaling through a physical uplink control channel (PUCCH) is needed at the time when the transmission of the aperiodic SRS is needed, transmit, by the UE, the aperiodic SRS or the uplink control signaling with a higher priority at the time according to the set priority criteria; if the transmission of the uplink control signaling through the PUCCH is not needed at the time when the transmission of the aperiodic SRS is needed, transmit the aperiodic SRS at the time.

12. The device according to claim 11, wherein the executing module comprises:
a judging unit, configured to judge whether the transmission of the uplink control signaling through the PUCCH is needed at the time when the transmission of the aperiodic SRS is needed acquired by the receiving module, if no, enable an aperiodic SRS transmitting unit at the time; if yes, judge a priority of the aperiodic SRS and a priority of the uplink control signaling according to the priority criteria saved in the priority criterion module, enable the aperiodic SRS transmitting unit at the time if the priority of the aperiodic SRS is higher; and enable an uplink control signaling transmitting unit at the time if the priority of the uplink control signaling is higher;
the aperiodic SRS transmitting unit, configured to transmit the aperiodic SRS in an enabled state; and
the uplink control signaling transmitting unit, configured to transmit the uplink control signaling in the enabled state.

13. The device according to claim 11, wherein the uplink control signaling is an uplink control signaling with a format of a single frame structure.

14. The device according to claim 11, wherein the receiving, by the receiving module, the downlink control signaling transmitted by the base station, and acquiring the time when the transmission of the aperiodic SRS is needed, is:
receiving, by the receiving module, one downlink control signaling transmitted by the base station, and acquiring at least two times when the transmission of the aperiodic SRS is needed.

15. The device according to claim 12, wherein the judging unit is further configured to enable the aperiodic SRS transmitting unit within a transmission time interval (TTI) available for the aperiodic SRS after the time, after enabling the uplink control signaling transmitting unit at the time when the judging unit judges that the priority of the uplink control signaling is higher.

16. The device according to claim 15, wherein the transmission time interval (TTI) available for the aperiodic SRS is:
a first TTI available for the aperiodic SRS with no collision with the uplink control signaling after the time.

17. The device according to claim 12, wherein the judging unit further comprises: a first judging subunit, configured to: after the judging unit judges that the priority of the uplink control signaling is higher, and enables the uplink control signaling transmitting module at the time,
judge whether a TTI available for the aperiodic SRS with no collision with the uplink control signal exists within a time window of a length m after the time, if yes, enable the aperiodic SRS transmitting module within a first TTI available for the aperiodic SRS with no collision with the uplink control signaling after the time.

18. The device according to claim 17, wherein the length of the time window is pre-set at a UE side and a base station side, or the time window is set through transmitting a signaling by the base station to the UE.

19. The device according to claim 11, wherein the priority criterion module comprises:
a signaling receiving unit, configured to receive a signaling carrying the priority criteria of the aperiodic SRS and the uplink control signaling from the base station;
a priority setting unit, configured to take the priority criteria of the aperiodic SRS and the uplink control signaling in the signaling received by the signaling receiving unit as the priority criteria of the aperiodic SRS and the uplink control signaling of the priority criterion module.

20. The device according to any one of claims 11-19, wherein the priority criteria of the aperiodic SRS and the uplink control signaling comprise any one or any combination of the following priority criteria:
if the uplink control signaling is configured to transmit ACK/NAK information or rank indicator information, the priority of the uplink control signaling is higher than the priority of the aperiodic SRS; otherwise, the priority of the aperiodic SRS is higher than the priority of the uplink control signaling;
if the uplink control signaling is configured to transmit rank indicator (RI) information and RI information needed to be transmitted by the UE is different from RI information transmitted most recently before a n-th time, the priority of the uplink control signaling is higher than the priority of the aperiodic SRS; otherwise, the aperiodic SRS has a priority higher than the uplink control signaling;
if the uplink control signaling is configured to transmit broadband channel state information, the priority of the uplink control signaling is higher than the priority of the aperiodic SRS; otherwise, the priority of the aperiodic SRS is higher than the priority of the uplink control signaling;
if the uplink control signaling is transmitted periodically and a period of the transmission of the uplink control signaling is greater than a preset period threshold value, the priority of the uplink control signaling is higher than the priority of the aperiodic SRS, otherwise, the priority of the aperiodic SRS is higher than the priority of the uplink control signaling;
if a payload of the uplink control signaling is greater than a preset load threshold value, the priority of the uplink control signaling is higher than the priority of the aperiodic SRS, otherwise, the priority of the aperiodic SRS is higher than the priority of the uplink control signaling;
if strength of a signal received by a UE from the base station is greater than a preset signal strength threshold value, the priority of the uplink control signaling is higher than the priority of the aperiodic SRS, otherwise, the priority of the aperiodic SRS is higher than the priority of the uplink control signaling;
the aperiodic SRS and the uplink control signaling have a priority higher than the other alternatively;
if the UE is configured with a special mode by the base station, the priority of the uplink control signaling is higher than the priority of the aperiodic SRS, otherwise, the priority of the aperiodic SRS is higher than the priority of the uplink control signaling; wherein the special mode comprises a downlink multiple-input-multiple-output (MIMO) transmission mode, a feedback mode and an uplink MIMO transmission mode.

21. A method for resolving a collision between an aperiodic sounding reference signal (SRS) and an uplink control signaling, comprising the following steps of:
configuring, by the base station, priority criteria of the aperiodic SRS and the uplink control signaling;
transmitting, by the base station, a downlink control signaling to the UE, wherein the downlink control signaling is used to notify the UE of a time when a transmission of the aperiodic SRS is needed;
if a reception of the uplink control signaling through a physical uplink control channel (PUCCH) is needed at a receiving time corresponding to the time when the transmission of the aperiodic SRS is needed, receiving, by the base station, the aperiodic SRS or the uplink control signaling with a higher priority at the receiving time according to the acquired priority criteria; if the reception of the uplink control signaling through the PUCCH is not needed at the receiving time when the transmission of the aperiodic SRS is needed, receiving the aperiodic SRS at the receiving time.

22. The method according to claim 21, wherein the downlink control signaling carries at least two times when the transmission of the aperiodic SRS is needed.

23. The method according to claim 21, if the base station receives the uplink control signaling with the higher priority at the time, after the time, the method further comprises:
receiving, by the base station, the aperiodic SRS within a transmission time interval (TTI) available for the aperiodic SRS after the receiving time.

24. The method according to claim 21, further comprising: transmitting, by the base station, a signaling to the UE to set a time window of a length m.

25. The method according to any one of claims 21-24, wherein the priority criteria of the aperiodic SRS and the uplink control signaling comprise any one or any combination of the following priority criteria:
if the uplink control signaling is configured to transmit ACK/NAK information or rank indicator information, a priority the uplink control signaling is higher than a priority of the aperiodic SRS; otherwise, the priority of the aperiodic SRS is higher than the priority of the uplink control signaling;
if the uplink control signaling is configured to transmit rank indicator (RI) information and RI information needed to be transmitted by the UE is different from RI information transmitted most recently before a n-th time, the priority of the uplink control signaling is higher than the priority of the aperiodic SRS; otherwise, the priority of the aperiodic SRS is higher than the priority of the uplink control signaling;
if the uplink control signaling is configured to transmit broadband channel state information, the priority of the uplink control signaling is higher than the priority of the aperiodic SRS; otherwise, the priority of the aperiodic SRS is higher than the priority of the uplink control signaling;
if the uplink control signaling is transmitted periodically and a period of the transmission of the uplink control signaling is greater than a preset period threshold value, the priority of the uplink control signaling is higher than the priority of the aperiodic SRS, otherwise, the priority of the aperiodic SRS is higher than the uplink control signaling;
if a payload of the uplink control signaling is greater than a preset load threshold value, the priority of the uplink control signaling is higher than the priority of the aperiodic SRS, otherwise, the priority of the aperiodic SRS is higher than the priority of the uplink control signaling;
if strength of a signal received by a UE from the base station is greater than a preset signal strength threshold value, the priority of the uplink control signaling is higher than the priority of the aperiodic SRS, otherwise, the priority of the aperiodic SRS is higher than the priority of the uplink control signaling;
the aperiodic SRS and the uplink control signaling have a priority higher than the other alternatively;
if the UE is configured with a special mode by the base station, the priority of the uplink control signaling is higher than the priority of the aperiodic SRS, otherwise, the priority of the aperiodic SRS is higher than the priority of the uplink control signaling; wherein the special mode comprises a downlink multiple-input-multiple-output (MIMO) transmission mode, a feedback mode and an uplink MIMO transmission mode.

26. A device for resolving a collision between an aperiodic sounding reference signal (SRS) and an uplink control signaling, wherein the device is located in a base station side, and comprises:
a priority criterion module, configured to configure priority criteria of the aperiodic SRS and the uplink control signaling;
a signaling transmitting module, configured to transmit a signaling carrying the priority criteria of the aperiodic SRS and the uplink control signaling set by the priority criterion module to a user equipment (UE); and configured to transmit a downlink control signaling to the UE, wherein the downlink control signaling is used to notify the UE of a time when a transmission of the aperiodic SRS is needed;
an receiving module, configured to receive the uplink control signaling or the aperiodic SRS at a receiving time corresponding to the time when the transmission of the aperiodic SRS is needed, particularly comprising: if a reception of the uplink control signaling through a physical uplink control channel (PUCCH) is needed at the time when the transmission of the aperiodic SRS is needed, receiving, by the base station, the aperiodic SRS or the uplink control signaling with a higher priority at the receiving time according to the acquired priority criteria; if the reception of the uplink control signaling through the PUCCH is not needed at the time when the transmission of the aperiodic SRS is needed, receiving the aperiodic SRS at the receiving time.

27. The device according to claim 26, wherein the downlink control signaling carries at least two times when the transmission of the aperiodic SRS is needed.

28. The device according to claim 26, wherein the receiving module is further configured to receive the aperiodic SRS within a transmission time interval (TTI) available for the aperiodic SRS after the receiving time.

29. The device according to claim 26, further comprising:
a time window configuring module, configured to configure a time window of a length m;
the signaling transmitting module is further configured to notify the UE of the time window set by the time window configuring module through a signaling.

30. The device according to any one of claims 26-29, wherein the priority criteria of the aperiodic SRS and the uplink control signaling comprise any one or any combination of the following priority criteria:
if the uplink control signaling is configured to transmit ACK/NAK information or rank indicator information, a priority of the uplink control signaling is higher than a priority of the aperiodic SRS; otherwise, the priority of the aperiodic SRS is higher than the priority of the uplink control signaling;
if the uplink control signaling is configured to transmit rank indicator (RI) information and RI information needed to be transmitted by the UE is different from RI information transmitted most recently before a n-th time, the priority of the uplink control signaling is higher than the priority of the aperiodic SRS; otherwise, the priority of the aperiodic SRS is higher than the priority of the uplink control signaling;
if the uplink control signaling is configured to transmit broadband channel state information, the priority of the uplink control signaling is higher than the priority of the aperiodic SRS; otherwise, the priority of the aperiodic SRS is higher than the priority of the uplink control signaling;
if the uplink control signaling is transmitted periodically and a period of the transmission of the uplink control signaling is greater than a preset period threshold value, the priority of the uplink control signaling is higher than the priority of the aperiodic SRS, otherwise, the priority of the aperiodic SRS is higher than the priority of the uplink control signaling;
if a payload of the uplink control signaling is greater than a preset load threshold value, the priority of the uplink control signaling is higher than the priority of the aperiodic SRS, otherwise, the priority of the aperiodic SRS is higher than the priority of the uplink control signaling;
if strength of a signal received by a UE from the base station is greater than a preset signal strength threshold value, the priority of the uplink control signaling is higher than the priority of the aperiodic SRS, otherwise, the priority of the aperiodic SRS is higher than the priority of the uplink control signaling;
the aperiodic SRS and the uplink control signaling have a priority higher than the other alternatively;
if the UE is configured with a special mode by the base station, the priority of the uplink control signaling is higher than the priority of the aperiodic SRS, otherwise, the priority of the aperiodic SRS is higher than the priority of the uplink control signaling; wherein the special mode comprises a downlink multiple-input-multiple-output (MIMO) transmission mode, a feedback mode and an uplink MIMO transmission mode.
